(19)

Europäisches
Patentamt
European
Patent Office
Office européen
des brevets

(11)　**EP 3 401 798 A1**

(12)

# EUROPEAN PATENT APPLICATION
published in accordance with Art. 153(4) EPC

(43) Date of publication:
　　14.11.2018　Bulletin 2018/46

(21) Application number: 16883453.9

(22) Date of filing: 27.12.2016

(51) Int Cl.:
　　*G06F 17/30* (2006.01)

(86) International application number:
　　PCT/CN2016/112496

(87) International publication number:
　　WO 2017/118328 (13.07.2017 Gazette 2017/28)

(84) Designated Contracting States:
　　**AL AT BE BG CH CY CZ DE DK EE ES FI FR GB
　　GR HR HU IE IS IT LI LT LU LV MC MK MT NL NO
　　PL PT RO RS SE SI SK SM TR**
　　Designated Extension States:
　　**BA ME**
　　Designated Validation States:
　　**MA MD**

(30) Priority:　**04.01.2016　CN 201610006885**

(71) Applicant: **Tencent Technology (Shenzhen)
　　Company Limited
　　Shenzhen, Guangdong 518057 (CN)**

(72) Inventors:
　• **JIANG, Lei
　　Shenzhen
　　Guangdong 518057 (CN)**
　• **CHEN, Ge
　　Shenzhen
　　Guangdong 518057 (CN)**
　• **JIANG, Lieqiong
　　Shenzhen
　　Guangdong 518057 (CN)**
　• **LIU, Lei
　　Shenzhen
　　Guangdong 518057 (CN)**
　• **HUANG, Dongbo
　　Shenzhen
　　Guangdong 518057 (CN)**

　• **LI, Wenjie
　　Shenzhen
　　Guangdong 518057 (CN)**
　• **HUANG, Hao
　　Shenzhen
　　Guangdong 518057 (CN)**
　• **GU, Junqing
　　Shenzhen
　　Guangdong 518057 (CN)**
　• **HUANG, Wei
　　Shenzhen
　　Guangdong 518057 (CN)**
　• **JIANG, Zhi
　　Shenzhen
　　Guangdong 518057 (CN)**
　• **ZHANG, Hong
　　Shenzhen
　　Guangdong 518057 (CN)**
　• **XU, Lan
　　Shenzhen
　　Guangdong 518057 (CN)**
　• **ZHU, Siyu
　　Shenzhen
　　Guangdong 518057 (CN)**
　• **JIN, Wei
　　Shenzhen
　　Guangdong 518057 (CN)**

(74) Representative: **AWA Sweden AB
　　P.O. Box 45086
　　104 30 Stockholm (SE)**

(54)　**PUSH INFORMATION ROUGH SELECTION SORTING METHOD, DEVICE AND COMPUTER
　　STORAGE MEDIUM**

(57)　Embodiments of the present invention disclose a method and an apparatus for coarsely selecting push information. The method includes: determining a feature for calculating a predicted value, and a weight corresponding to the feature according to historical push data of the push information; calculating a standard deviation of the feature; determining a fluctuation probability of the standard deviation; calculating the predicted value based on the weight, the standard deviation, and the fluctuation probability, the standard deviation and the fluctuation probability being used for calculating a fluctuation value correcting the weight; and selecting, based on the predicted value, push information satisfying a preset condition. The embodiments of the present invention also disclose a computer storage medium.

EP 3 401 798 A1

S110

Determine a feature for calculating a predicted value, and a weight corresponding to the feature according to historical push data of push information

S120

Calculate a standard deviation of the feature

S130

Determine a fluctuation probability of the standard deviation

S140

Calculate the predicted value based on the weight, the standard deviation, and the fluctuation probability, the standard deviation and the fluctuation probability being used for calculating a fluctuation value correcting the weight

S150

Select, based on the predicted value, push information satisfying a preset condition

FIG. 1

**Description**

FIELD OF THE TECHNOLOGY

The present disclosure relates to the field of information processing, and in particular, to a method and an apparatus for coarsely selecting and sorting push information and a computer storage medium.

BACKGROUND OF THE DISCLOSURE

With the development of the information technology, the existing technology is always devoted to resolving a problem of determining a target user of information push to improve efficiency of information push in the field of information push. The information push includes advertisement push, and a video, an audio, and picture and text information recommended to a user, and the like. To send to the user push information that the user is interested in and improve transmission of push information and resource effective utilization, sorting of popularities of the various push information is predicted. During prediction, coarse selection and sorting and accurate selection and sorting of predicted values are included. During coarse selection and sorting, a small amount of push information with relatively high popularities is selected from thousands of pieces of push information according to current data of the push information, and then during accurate selection and sorting, popularities of coarsely selected push information and predicted probabilities for the coarsely selected push information to be viewed or clicked are further accurately sorted. However, it is found in the existing technology that usually some push information is very popular with users, the push information has a problem of a short push time, and consequently, is filtered during coarse selection, causing a problem of low accuracy of a processing result.

SUMMARY

In view of the above, embodiments of the present invention expect to provide a method and an apparatus for coarsely selecting and sorting push information, and a computer storage medium, to at least partially resolve a problem of low accuracy of a coarse selection result.

Technical solutions of the embodiments are implemented in this way:

A first aspect of the embodiments of the present invention provides a method for coarsely selecting push information, the method including:

determining a feature for calculating a predicted value, and a weight corresponding to the feature according to historical push data of the push information;

calculating a standard deviation of the feature;

determining a fluctuation probability of the standard deviation;

calculating the predicted value based on the weight, the standard deviation, and the fluctuation probability, the standard deviation and the fluctuation probability being used for calculating a fluctuation value for correcting the weight; and

selecting, based on the predicted value, push information satisfying a preset condition.

A second aspect of the embodiments of the present invention provides an apparatus for coarsely selecting push information, the apparatus including a determining unit, a calculation unit, and a selection unit,
the determining unit being configured to determine a feature for calculating a predicted value, and a weight corresponding to the feature according to historical push data of the push information;
the calculation unit being configured to calculate a standard deviation of the feature;
the determining unit being further configured to determine a fluctuation probability of the standard deviation;
the calculation unit being further configured to calculate the predicted value based on the weight, the standard deviation, and the fluctuation probability, the standard deviation and the fluctuation probability being used for calculating a fluctuation value for correcting the weight; and
the selection unit being configured to select, based on the predicted value, push information satisfying a preset condition.

A third aspect of the embodiments of the present invention provides a computer storage medium, the computer storage medium storing computer executable instructions, the computer executable instructions being used for performing the method for coarsely selecting push information. In the method and apparatus for coarsely selecting push information and the computer storage medium that are provided in the embodiments of the present invention, when the predicted value for coarse selection is calculated, the standard deviation of the feature is determined, the fluctuation probability corresponding to the feature is determined, and the standard deviation and the fluctuation probability can be used for calculating the fluctuation value for correcting the weight corresponding to the feature. In this way, when a standard value fluctuates relatively largely, push information with relatively small historical push data currently has a chance of entering, as coarsely selected push information, subsequent accurate selection to be re-selected. Consequently, a problem in the existing technology that some orders with good push effects is filtered in coarse selection due to small historical push data, resulting in that push information with good push effects cannot be selected finally can be resolved, thereby improving accuracy of coarse selection.

BRIEF DESCRIPTION OF THE DRAWINGS

FIG. 1 is a schematic flowchart of a first method for coarsely selecting push information according to an embodiment of the present invention;

FIG. 2 is a schematic flowchart of a second method for coarsely selecting push information according to an embodiment of the present invention;

FIG. 3 is a schematic structural diagram of a first apparatus for coarsely selecting push information according to an embodiment of the present invention;

FIG. 4 is a schematic structural diagram of a second apparatus for coarsely selecting push information according to an embodiment of the present invention; and

FIG. 5 is a schematic flowchart of calculating a predicted value according to an embodiment of the present invention.

DESCRIPTION OF EMBODIMENTS

The technical solutions of the present invention are further stated in detail below with reference to the accompanying drawings and specific embodiments of the specification. It should be understood that the preferred embodiments described below are only used for describing and explaining the present disclosure and are not used for limiting the present disclosure.

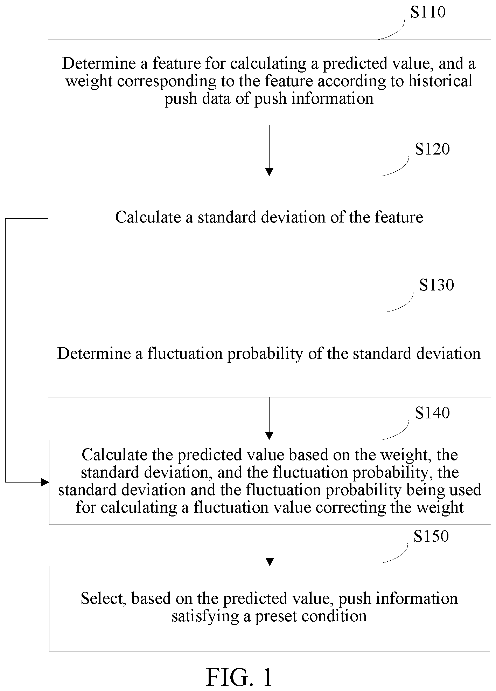

As shown in FIG. 1, an embodiment provides a method for coarsely selecting push information, the method including:

Step S110: Determine a feature for calculating a predicted value, and a weight corresponding to the feature according to historical push data of the push information.

Step S120: Calculate a standard deviation of the feature.

Step S130: Determine a fluctuation probability of the standard deviation.

Step S140: Calculate the predicted value based on the weight, the standard deviation, and the fluctuation probability, the standard deviation and the fluctuation probability being used for calculating a fluctuation value correcting the weight.

Step S150: Select, based on the predicted value, push information satisfying a preset condition.

The push information in this embodiment may include information such as advertisements. The advertisements herein may include various types of advertisements such as social advertisements. The method for coarsely selecting push information in this embodiment may be applied to push platforms of various push information or may be used in various selection devices that determine to use information as effect push.

In this embodiment, step S110 includes "according to historical push data of the push information". The historical push data herein corresponds to advertisements and may include historical advertisement data. The historical advertisement data herein may include various data formed in a push process based on push information such as a seed user that clicks, views, or executes a conversion behavior expected by an advertisement, a behavior expiration date, a click rate, a conversion rate, an advertisement placement position, and an advertisement placement time. The conversion behavior may include operations that push information desires a user to perform, such as downloading an application (APP) and purchasing services and commodities promoted in corresponding push information.

In this embodiment, the standard deviation calculated in step S120 is a standard deviation for a feature. The standard deviation herein is: a standard deviation of an operation result in the historical push data when the feature is a specified value. The operation result herein is used for representing a value indicating whether a user whose feature is a specified value performs an operation expected by the push data. For example, using an advertisement A as an example, a corresponding feature is ages. If four bits respectively represent four different age groups, assuming that a user C is in a first age group, a first bit corresponding to the first age group is 1, and other bits are 0. In this case, a value of the feature, ages, is 1000. When a standard deviation is calculated, if data rows of historical push data whose age feature is 1000 are used, these data rows include a column of operation results whether the user clicks the advertisement A. It is assumed that "1" represents clicking the advertisement, and "0" represents not clicking the advertisement in the column of operation results. For example, values of age features of 50 data rows among data rows of the historical push data are 1000, 50 columns of result columns are extracted as sample data, to solve the standard deviation. The solved standard deviation is a standard deviation, in the first age group, of the age feature. When the predicted value is calculated, a set of users that receive the push information is determined, and age features of these users are extracted. For example, a probability value of clicking of the advertisement pushed among users in the first age group is calculated. For another example, the value of the feature is "gender being female", and a standard deviation of the feature "gender being female" is a standard deviation of executing, by a female, a conversion operation expected by the push information in the historical push data. For example, the standard deviation is a standard deviation of clicking the advertisement by a female.

The fluctuation probability of the standard deviation is determined in step S130, and in this embodiment, the fluctuation probability may be determined by using a preset algorithm, for example, the fluctuation probability is determined by using a random algorithm. The random algorithm herein includes a Gaussian random algorithm.

The predicted value is calculated based on the weight, the standard deviation, and the fluctuation probability in step S140. The weight herein is a weight of each feature that correspondingly calculates the predicted value.

Features participating in calculation of the predicted value in this embodiment may include features of the push information and user features. The push information herein may include a push position and a push identifier. The push identifier herein may be a sequence number of the push information. The push position may include a release position in which the push information is released. The release position herein may include an information release position on a social application, for example, Wechat moments, a first page of an application login interface, and a page header part of an application page. Certainly, the release position herein may include a first page of a browser, a side advertisement position of a browser, a floating window, and the like. The user features may include features of users that reads the push information, clicks the push information, or executes other conversion behaviors expected by the push information. These user features may include various features that can represent user characteristics such as ages, genders, professions, behavior preferences, hobbies, and consumption levels of the users.

In this embodiment, the predicted value may be used for representing continuing releasing the push information and a probability of executing, by the user, the conversion behavior expected by the push information. For example, the advertisement A has been released for a period of time, and the feature standard deviation is calculated according to historical advertisement data formed by releasing of the advertisement A. The fluctuation probability is determined in step S130, and in step S140, the weight is corrected by using the standard deviation and the fluctuation probability, to obtain a corrected weight, and then a probability for the advertisement A to be subsequently clicked is predicted by using the corrected weight.

The predicted value may be specifically calculated by using the following formula in step S140:

$$y = \frac{1}{1 + e^{-\sum (w_i + \sqrt{\sigma_i^2 * p}) x_i}}$$

In the foregoing formula, y is the predicted value, $x_i$ is a value of a feature *i*, $w_i$ is a weight of the feature *i*, and $\sigma_i$ is a standard deviation of the feature. The predicted value is calculated by using a logistic regression algorithm in this embodiment. During specific implementation, the predicted value may also be calculated by using a Bayesian algorithm. $w_i + \sqrt{\sigma_i^2 * p}$ is a corrected weight obtained by calculation based on the fluctuation probability and the standard deviation. In the Bayesian algorithm, the original weight may be replaced with the corrected weight, so that the predicted value in this embodiment is also obtained by calculation. It should be noted that in this embodiment, there are I features in total, and a value of i is from 1 to I.I is an integer not less than 1. It should be noted that $-\sum(w_i + \sqrt{\sigma_i^2 * p})x_i$ is an exponent of e. e is a natural constant.

During specific implementation, predicted values may be sorted according to the predicted values of various push information, and push information ranked ahead is then selected as a coarse selection result of coarsely selecting the push information of this time; or push information whose predicted value is greater than a coarse selection threshold is used as a coarse selection result of coarsely selecting the push information of this time. In conclusion, after step S140 in this embodiment is performed, push information satisfying the preset condition may also be selected based on the predicted value. The selected push information may be used as push information of effect push. The effect push may be a push operation of paying based on a push effect.

In this embodiment, the standard deviation and the fluctuation probability are introduced to correct the weight. In this way, when push information that currently has a relatively short push time or has a relatively small push amount but achieves expected push effects participates in contest, a situation in which the push information with a relatively small push amount is missed due to the relatively small push amount during coarse selection is alleviated, thereby improving a situation in which push information with good push effects are selected during coarse selection. For example, advertisements are identified by orders. When an advertisement has some orders, the advertisement can be placed to an advertisement platform. Due to a short placement time or a small placement amount, the advertisement has relatively few historical advertisement data. If orders are coarsely selected by using the existing technology, advertisements with small placement amounts or short placement times may be easily screened, and consequently, the coarsely selected advertisements are not one or more advertisements with best placement effects, causing a phenomenon such as low accuracy of coarse selection. However, by means of the information processing method in this embodiment, by introducing the fluctuation probability and the standard deviation, a situation of large fluctuation of data caused by small historical push data and missing of push information with good push effects is alleviated, thereby improving accuracy of coarse selection.

In some embodiments, the method further includes:
determining a fluctuation coefficient, where the fluctuation coefficient is used for limiting a value range of the fluctuation value.

Step S140 may include: calculating the predicted value based on the weight, the standard deviation, the fluctuation probability, and the fluctuation coefficient.

The fluctuation coefficient is also introduced to the method of this embodiment, and the fluctuation coefficient herein is used for limiting a value range of the fluctuation value. When a standard deviation of a feature is excessively large, the value of the fluctuation value may be excessively large if the method of the forgoing embodiment is used. The fluctuation coefficient is introduced in this embodiment, and the fluctuation coefficient may be used for performing a multiplication operation with a result obtained based on the fluctuation probability and the standard deviation, to obtain the fluctuation value. In this embodiment, the fluctuation coefficient is usually an integer greater than 0 and not greater than 1. If the value of the fluctuation coefficient is 0, in this example, the fluctuation value may be 0. In this case, the weight is not corrected, so that a phenomenon of large fluctuation of the standard deviation caused by a small data amount of the historical push data is omitted. The fluctuation coefficient may be a preset parameter, specifically may be an empirical value obtained according to historical operation recording or an experimental value obtained from experimental data by means of one or more experiments, and in conclusion, a value that can be known in advance when the method for coarsely selecting push information of this embodiment is calculated. In this embodiment, the fluctuation coefficient is introduced to adjust the fluctuation value, to avoid that the fluctuation value is excessively large or excessively small, to avoid a situation that a calculation result is not sufficiently accurate due to excessively large fluctuation of the feature value, further improving accuracy of coarse selection.

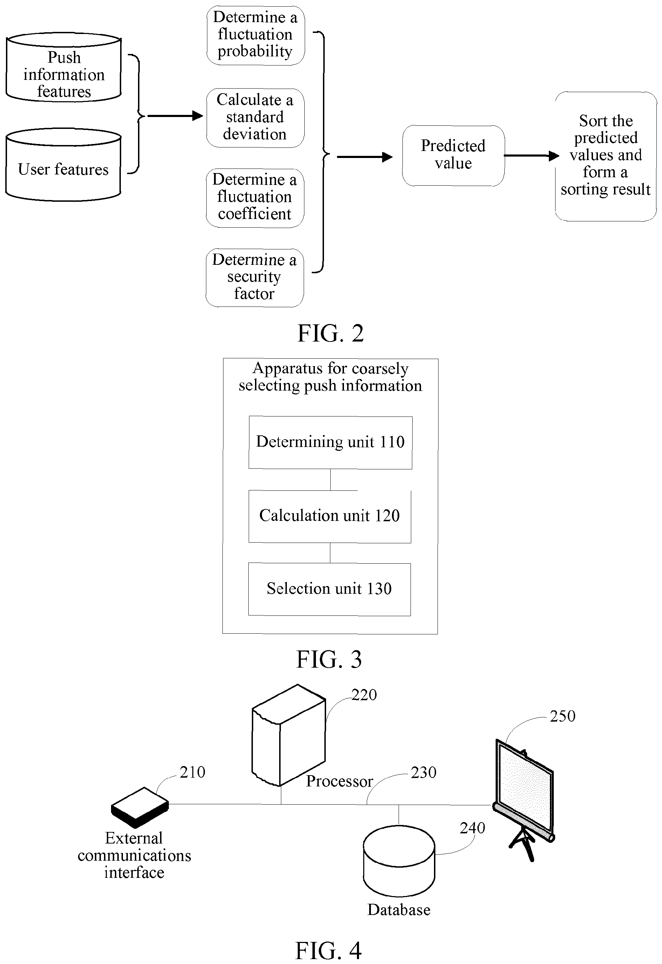

FIG. 2 is another schematic flowchart of a method for coarsely selecting push information according to an embodiment. The method specifically includes: extracting push information features and user features; calculating standard deviations, where the calculating standard deviations includes calculating various standard deviations of features for calculating predicted values; while, before, or after calculating the standard deviations, determining a fluctuation coefficient, determining a security factor, and determining a fluctuation probability; then, calculating the predicted values based on the fluctuation probability, the standard deviation, the fluctuation coefficient, and the security factor; finally, sorting the predicted values, to form a sorting result; and selecting, based on the sorting result, push information whose predicted value is ranked ahead as a pushing result.

In some other embodiments, the method further includes:
determining a fluctuation coefficient, where the fluctuation coefficient is used for limiting a value range of the fluctuation value.

Step S150 may include: calculating the predicted value based on the weight, the standard deviation, the fluctuation probability, and the fluctuation coefficient.

The method further includes:
determining a security factor, where the security factor is used for preventing abnormal solution of the fluctuation value caused when the standard deviation is a particular value or the standard deviation is not obtained.

Step S140 may include:
calculating the predicted value based on the weight, the standard deviation, the fluctuation probability, and the security factor.

The security factor is introduced in this embodiment. If the standard deviation has an abnormal or extreme situation, how to determine that the standard deviation is abnormal. For example, a value of the standard deviation is a particular value, specifically, the standard deviation is 0. In this embodiment, when not obtaining the standard deviation is also a standard deviation abnormity, usually, if the standard deviation is not obtained, the standard deviation is defaulted as 0. If the standard deviation is 0, it may lead to that the fluctuation value is 0. A security factor is introduced to this embodiment. The security factor is usually an extremely small positive number. In this embodiment, the security factor is a constant less than a predetermined value, for example, is usually a constant not greater than one thousandth. For example, a value of the security factor is one ten-thousandth.

When the standard deviation is normal, because an extremely small value has extremely small interference to calculation of the fluctuation value. When the standard deviation is abnormal, the security factor is an extremely small positive number, so that the fluctuation value is not 0, but the fluctuation value is usually extremely small. In this way, because of introduction of the security factor, an electronic device calculates a phenomenon of an abnormal predicted value caused by the abnormal fluctuation value.

As further improvement to this embodiment, an available example based on the fluctuation probability, the standard deviation, the security factor, and the fluctuation coefficient is particularly provided below. Step S150 may include:
calculating the predicted value $y$ by using the following formula:

$$y = \frac{1}{1 + e^{-\sum (w_i + \alpha \sqrt{\frac{1}{\beta + \frac{1}{\sigma_i^2}}} * p) x_i}}$$

where $x_i$ is a value of a feature $i$, $w_i$ is a weight of the feature $i$, $\alpha$ is the fluctuation coefficient, $\beta$ is the security factor, and $\sigma_i$ is a standard deviation of the feature.

Obviously, in this embodiment, $\sigma_i$ cannot be 0. If $\sigma_i$ is 0, $\frac{1}{\sigma_i^2}$ is abnormal, causing a fluctuation value abnormity.

In this way, an abnormity of predicted value calculation is caused. Certainly, during specific implementation, a situation in which the standard deviation of the feature value of the push information is 0 hardly occurs.

It should be noted in this embodiment that there are I features in total, and a value of $i$ is from 1 to I.I is an integer not less than 1.

According to the foregoing formula, the predicted value for coarsely selecting the push information can be conveniently and accurately calculated, and a probability of occurrence of an abnormity is relatively small in a calculation process, and a value range of the fluctuation value is within a control range, thereby greatly improving accuracy of coarse selection of the push information.

As shown in FIG. 1, an embodiment of this embodiment provides another method for coarsely selecting push information, the method including:

Step S110: Determine a feature for calculating a predicted value, and a weight corresponding to the feature according to historical push data of the push information.

Step S120: Calculate a standard deviation of the feature.

Step S130: Determine a fluctuation probability of the standard deviation.

Step S140: Calculate the predicted value based on the weight, the standard deviation, and the fluctuation probability, the standard deviation and the fluctuation probability being used for calculating a fluctuation value correcting the weight.

Step S150: Select, based on the predicted value, push information satisfying a preset condition.

First, the method for coarsely selecting push information of this embodiment is an improvement to any technical solution of the foregoing embodiments. For example, step S140 may use the formula provided in Embodiment 3 to calculate the predicted value. This embodiment differs from the foregoing embodiment in that step S110 may include:

determining push information features for calculating the predicted value; and

determining user features for calculating the predicted value.

The push information features may include various information such as a release position of the push information, a release time, duration of the push information, an information volume of the push information, and an identifier of the push information.

The user features are used for calculating the predicted value, and the user features herein may include various features such as user ages, genders, skin colors, nationalities, and professions. The value of I may be a sum of a quantity of push information features and that of the user features in this embodiment.

In the existing technology, when the push information is coarsely selected, the push information is usually coarsely selected merely according to the push information features, leading to a result of omitting impact of feature characteristics on push effects of the push information, causing a situation in which push information with good push effects has a low predicted value. First, the user features are introduced to this embodiment, and the user features are used as features for calculating the predicted value. With reference to technical solutions provided in Embodiment 1 to Embodiment 3, $x_i$ may be a value of the push information feature or user feature, so as to further improve accuracy of coarse selection of the push information. Secondly, in this embodiment, by determining the user features, a small quantity of user features of the user, rather than all user features, are selected as user features for calculating the predicted value. In this way, appearance of a large calculation amount due to excessively many user features can be avoided. For example, it is determined in this embodiment that a specified quantity of user features participate in calculation of the predicted value. The specified quantity is a predetermined value, and usually, the specified quantity is an integer not less than 1, preferably 2 or more.

Refer to the existing technology when the push information features are selected. Details are not provided herein. There are multiple manners for screening the user features. Two optional manners are provided below:

Optional manner 1:

The determining user features for calculating the predicted value in step S110 may include:

determining reliability of the user features; and

selecting the user features for calculating the predicted value based on the reliability.

In this embodiment, the reliability may be a probability of realness and correctness of the user features. Reliability of the user features can be determined by means of value assignment according to the manner for obtaining the user features. For example, the obtaining manner may include features determined based on user entering and features obtained by automatically performing information processing and integration by the electronic device. For example, a user fills in a gender, an age, a graduate school, and the like in a social network. Features integrated by the electronic device include features such as user behavior preference determined based on a user operation. When the reliability is determined, the reliability may also be determined according to feature attributes of the user features. For example, the electronic device collects statistics on frequency information that the user logs in to pay attention to a topic and frequency information filled in by the user. In this case, the user feature attributes and an information source may be referred to. In this case, when the reliability is determined, because the statistics of frequency information of the electronic device is more accurate than the frequency information filled in by the user in most cases, when a value is assigned to the reliability, a higher value is assigned if the electronic device collects statistics on the frequency information, and a lower value is assigned if the frequency information is filled in by the user. For another example, for the user gender, the electronic device may analyze out, by using user behavior characteristics, whether the user is a female user or a male user. However, obviously, in a relatively transparent social application or an acquaintance social event, a user gender filled in by the user or a friend is more accurate than that analyzed by the electronic device according to the user behavior characteristics. In this case, a value is assigned to the reliability with reference to two manners, feature attributes and an information source. During specific implementation, there are multiple manners for determining the reliability of the user features, and the manners are not used as examples one by one in this embodiment.

Once the reliability is determined, user features for calculating the predicted value is selected according to the reliability. According to ascending order of reliabilities, user features corresponding to N reliabilities ranked ahead are selected as the user features for calculating the predicted value. For another example, user features whose reliabilities are greater than a reliability threshold are selected as the user features of the predicted value.

Optional manner 2:

The determining user features for calculating the predicted value in step S110 may include:
selecting one or more unprocessed user features from the user features as the user features for calculating the predicted value.

In this embodiment, the user features are divided into processed features and unprocessed features. The processed features are features obtained based on processing of multiple pieces of information, and the unprocessed features may include features that are filled in by the user and that are not determined in a manner such as secondary information integration. For example, an age, a name, an identity card number, and an original domicile address that are obtained by scanning an identity card are all the unprocessed features. For another example, according to a recorded statistical frequency of opening an application A by the user, a feature obtained by using a direct statistical operation and not by secondary integration processing with other information may also be an unprocessed feature. The processed feature may be all features except determined unprocessed features. For example, a user feature, a consumption level of a user that is determined according to methods such as purchasing of commodities and services by the user and booking of tickets for travelling, is integrated with a user purchasing behavior, a booking behavior, and the like, and thus is the processed feature.

Because of unprocessing of the unprocessed feature, that is, directness of determining, the unprocessed feature has accuracy higher than that of the processed feature. Therefore, in this embodiment, one or more unprocessed features are used as the user features for calculating the predicted values. A quantity of the user features for calculating the predicted value may be a static preset value or may be a dynamic value that is dynamically determined. For example, if all unprocessed features are used as the user features for calculating the predicted value in this embodiment, in this case, a quantity of the user features for calculating the predicted value is dynamically determined. Certainly, a preset value may be predetermined, so that a preset quantity of unprocessed features are selected from multiple unprocessed features as the user features for calculating the predicted value. Therefore, in this case, it may involve how to select some unprocessed features as the user features for calculating the predicted value. For example, priorities may be set to the unprocessed features in advance, and several user features for calculating the predicted value are selected according to the priorities.

In this embodiment, basic user features of the user may be preferably selected as the user features for calculating the predicted value, for example, relatively basic information of the user such as an age, a gender, a profession, an area, and education background is selected as the user features for calculating the predicted value. Certainly, these basic information may be filled in by the user or a friend, and may be user features with relatively high reliabilities, and unprocessed features with relatively high accuracy may be selected as the user features for calculating the predicted value.

In this embodiment, first, the user features are introduced to participate in coarse selection of the push information, so that a situation of low accuracy resulting from that only push information features are used to coarsely select the push information is alleviated. In addition, by means of selection of the user features, only some user features are selected for calculation, to reduce an information amount and avoid decrease in efficiency of coarse selection. Finally, when the user features are selected, the user features may be selected according to the reliability, or unprocessed features may be selected to participate in calculation. Accuracy of calculation can be improved again regardless of in which manner the user features are selected.

As shown in FIG. 3, an embodiment provides an apparatus for coarsely selecting push information, the apparatus including a determining unit 110, a calculation unit 120, and a selection unit 130,
the determining unit 110 being configured to determine a feature for calculating a predicted value, and a weight corresponding to the feature according to historical push data of the push information;
the calculation unit 120 being configured to calculate a standard deviation of the feature;
the determining unit 130 being further configured to determine a fluctuation probability of the standard deviation;
the calculation unit 120 being further configured to calculate the predicted value based on the weight, the standard deviation, and the fluctuation probability, the standard deviation and the fluctuation probability being used for calculating a fluctuation value correcting the weight; and
the selection unit 130 being configured to select, based on the predicted value, push information satisfying a preset condition.

Specific structures of the determining unit 110 and the selection unit 130 may correspond to a processor or a processing circuit. The processor may include a processing structure such as an application processor, a central processing unit, a micro processor, a digital signal processor, or a programmable array. The processing circuit may include a dedicated integrated circuit.

The determining unit 110 and selection unit 130 may separately correspond to different processors or processing circuits or may be integrated to correspond to a same processor or processing circuit. When the determining unit 110 and the selection unit 130 are integrated to correspond to a same processor or processing circuit, the processor or processing circuit may separately implement functions of the determining unit 110 and the selection unit 130 by means of time division multiplexing or thread concurrency.

A specific structure of the calculation unit 120 in this embodiment may correspond to a structure of a calculator or a processor having a calculation function. The calculation unit 120 is first used for calculating the standard deviation, then calculating the fluctuation value by using the standard deviation and the fluctuation probability, calculating the corrected weight by using the fluctuation value and the weight, and finally calculating the predicted value based on the corrected weight and the value of the feature.

As shown in FIG. 4, an embodiment provides an apparatus for coarsely selecting push information, including a processor 220, a storage medium 240, a display 250, and at least one external communications interface 210. The processor 220, the storage medium 240, and the external communications interface 210 are all connected by using a bus 230. The processor 220 may be an electronic part and component with a processing function such as a micro processor, a central processing unit, a digital signal processor, or a programmable logic array. Computer executable instructions are stored on the storage medium 240. The processor 220 executes the computer executable instructions stored in the storage medium 240 to perform any one of the foregoing methods, specifically, for example, determining a feature for calculating a predicted value, and a weight corresponding to the feature according to historical push data of the push information; calculating a standard deviation of the feature; determining a fluctuation probability of the standard deviation; calculating the predicted value based on the weight, the standard deviation, and the fluctuation probability, the standard deviation and the fluctuation probability being used for calculating a fluctuation value correcting the weight; and selecting, based on the predicted value, push information satisfying a preset condition.

In this embodiment, refer to corresponding embodiments for relevant descriptions of the standard deviation, the fluctuation probability, and the predicted value. Details are not provided herein. For example, the fluctuation probability may be a random probability. For example, the fluctuation probability is equal to a Gaussian random probability value.

The apparatus for coarsely selecting push information in this embodiment may be a structure composed of one or more servers for coarsely selecting push information. The server may be a device located in a platform of push information such as advertisements. In conclusion, the apparatus for coarsely selecting push information in this embodiment provides implementation hardware to the foregoing method of coarsely selecting push information and has a feature of high accuracy of coarse selection of the push information.

In an embodiment, the determining unit 110 is further configured to determine a fluctuation coefficient, where the fluctuation coefficient is used for limiting a value range of the fluctuation value; and

the calculation unit 120 is configured to calculate the predicted value based on the weight, the standard deviation, the fluctuation probability, and the fluctuation coefficient.

In this embodiment, the determining unit 110 may correspond to a human-machine interaction interface, and the fluctuation coefficient entered by a working staff may be received by using the human-machine interaction interface. Certainly, the determining unit 110 may also correspond to a processor or a processing circuit and read the fluctuation coefficient prestored in a computer storage medium, or may correspond to a communications interface, so that other electronic devices find or receive the fluctuation coefficient.

In this embodiment, the calculation unit 120 specifically calculates the predicted value according to the weight, the standard deviation, the fluctuation probability, and the fluctuation coefficient. The fluctuation coefficient, the standard deviation, or the fluctuation probability is a parameter for calculating a fluctuation value. Refer to the foregoing embodiments for a specific calculation function relationship or method. The specific calculation function relationship or method is not repeated in this embodiment.

In conclusion, by introducing the fluctuation coefficient to this embodiment, a situation in which the predicted value is abnormal due to an excessively large standard deviation is alleviated, so as to improve accuracy of calculation.

In another embodiment, the determining unit 110 is further configured to determine a fluctuation coefficient, where the fluctuation coefficient is used for limiting a value range of the fluctuation value; and

the calculation unit 120 is configured to calculate the predicted value based on the weight, the standard deviation, the fluctuation probability, and the fluctuation coefficient.

In an embodiment, the determining unit 110 is configured to determine a security factor, where the security factor is used for preventing abnormal solution of the fluctuation value caused when the standard deviation is a particular value or the standard deviation is not obtained; and

the calculation unit 120 is configured to calculate the predicted value based on the weight, the standard deviation, the fluctuation probability, and the security factor.

The security factor is introduced to this embodiment. The security factor may be an extremely small value such as a constant less than one thousandth. In this embodiment, refer to the determined hardware structure of the fluctuation coefficient in the foregoing embodiments for a hardware structure corresponding to the determining unit 110. However, a difference lies in the security factor determined in this embodiment. The standard deviation abnormity herein may include that the standard deviation is a predetermined abnormal value, or may be not obtaining an abnormal value, or other standard deviation obtaining situations satisfying an abnormity condition.

Certainly, the security factor in the embodiments of this embodiment, same as the fluctuation coefficient, the standard deviation, and the fluctuation probability, is a dependent variable participating in calculation of the fluctuation value.

In this embodiment, calculation unit 120 calculates the fluctuation value based on the security factor, avoiding that a fluctuation value abnormity causes a predicted value abnormity and reducing occurrence of an abnormal situation in a calculation process.

There are multiple function relationships for calculating the predicted value. In this embodiment, the calculation unit 120 is used for calculating the predicted value $y$ by using the following formula:

$$y = \frac{1}{1 + e^{-\sum (w_i + \alpha \sqrt{\frac{1}{\beta + \frac{1}{\sigma_i^2}} * p}) x_i}}$$

where $x_i$ is a value of a feature $i$, $w_i$ is a weight of the feature $i$, $\alpha$ is the fluctuation coefficient, $\beta$ is the security factor, and $\sigma_i$ is a standard deviation of the feature.

Certainly, the calculation unit may calculate the predicted value by using a Bayesian algorithm or a logistic regression algorithm. Algorithms are not limited to the foregoing algorithms.

In conclusion, this embodiment provides an apparatus of specifically calculating the predicted value. The apparatus has a characteristic of high accuracy of coarsely selecting push information according to the predicted value and also has characteristics of a simple structure and being convenient to implement.

In some embodiments, the determining unit 110 is configured to: determine push information features for calculating the predicted value; and determine user features for calculating the predicted value.

A hardware structure of the determining unit 110 in this embodiment is similar to that of the determining unit provided in the foregoing embodiment. It should be noted that the features that are used for calculating the predicted value that are determined by the determining unit 110 in this embodiment include push information features and user features. The push information features may include various push information such as a push position and a push time, and the user features may include various forms of features of the user.

In this way, the apparatus for coarsely selecting push information of this embodiment pays attention to the push information features as well as the user features when calculating the predicted value and does not separate the user features and the push information features as perceived, avoiding that impact of the user features on push effects is omitted when the predicted value is calculated, so as to improve accuracy of coarse selection of push information again.

There are multiple optional structures corresponding to the determining unit 110. Two optional structures are provided below:

Optional structure 1:

The determining unit 110 is configured to: determine reliability of the user features; and select the user features for calculating the predicted value based on the reliability. In this case, the determining unit 110 may also correspond to a processor or a processing circuit or may correspond to a comparator. For example, by means of comparison by the comparator, user features whose reliabilities are greater than a reliability threshold are selected as the user features for calculating the predicted value.

Optional structure 2:

The determining unit 110 is specifically configured to select one or more unprocessed user features from the user features as the user features for calculating the predicted value. In this embodiment, a hardware structure corresponding to the determining unit 110 may also include a processor or a processing circuit. By dividing the user features into unprocessed features and processed features, one or more unprocessed features are selected as the user features for calculating the predicted value.

In conclusion, first, in the apparatus for coarsely selecting push information of this embodiment, the user features are introduced to calculate the predicted value, and a result of coarsely selecting push information based on the predicted value has a characteristic of high accuracy. Secondly, a problem of a large calculation amount caused by introducing user features to calculation may be avoided by screening the user features. Thirdly, user features with high reliabilities or user features that can accurately represent user characteristics such as unprocessed features are selected to participate in calculation, thereby improving accuracy of a coarse selection result again.

A specific example is provided below:

The push information in this example may be advertisements, and this example provides a method for coarsely selecting advertisements based on any technical solution recorded in the foregoing embodiments. In this embodiment,

In this example, a predicted value *y* of an advertisement is calculated by using the following formula, and the predicted value may be a probability for the advertisement to be clicked.

$$y = \frac{1}{1 + e^{-\sum \left(w_i + \alpha \sqrt{\frac{1}{\beta + \frac{1}{\sigma_i^2}}} * rand\_gaussian\right) x_i}}$$

where $x_i$ is a value of a feature *i*, $w_i$ is a weight of the feature *i*, $\alpha$ is the fluctuation coefficient, $\beta$ is the security factor, and $\sigma_i$ is a standard deviation of the feature. *rand_gaussian* is a random probability determined by obeying Gaussian random distribution.

$\alpha$ is a fluctuation coefficient of a fluctuation value. When $\alpha$ is 0, the fluctuation value does not act.

$\beta$ is an extremely small constant and may be usually one ten-thousandth.

$\sigma_i$ is a standard deviation of to-be-processed data whose feature *i* has a value of a specified value. Solution of the standard deviation is described by using the following table as an example. In this example, a classification model may be first determined according to historical advertisement data, and then advertisement information of a to-be-placed advertisement in a database and to-be-tested user data are processed by using the classification model, to determine a probability for the user to click the advertisement. The advertisement information is the to-be-tested user data, that is, the to-be-processed data.

| Row sequence number | Whether being male | Whether being female | Whether being order 1 | Whether being order 2 | Whether being order 4 | Category tag |
|---|---|---|---|---|---|---|
| 1 | 1 | 0 | 1 | 0 | 0 | 1 |
| 2 | 0 | 1 | 1 | 0 | 0 | 0 |
| 3 | 0 | 1 | 1 | 0 | 0 | 0 |
| 4 | 1 | 0 | 1 | 0 | 0 | 0 |
| 5 | 1 | 0 | 1 | 0 | 0 | 0 |
| 6 | 1 | 0 | 0 | 1 | 0 | 0 |

In the foregoing table, a middle column 5 is referred to as a feature column, a first column is a row sequence number column, and a seventh column is a category tag column. i is a sequence number of the feature column. "1" in the feature column in Table 1 represents that a logic value is "yes", and 0 represents that a logic value is "no". For example, in a second column, "1" represents being male, and "0" represents being not male.

For the second column, there are four records of male, and the four records are respectively in feature rows whose row sequence numbers are 1, 4, 5, and 6, and category tags corresponding to the four rows are respectively 1, 0, 0, and 0. Therefore, calculation of $\sigma_i$ is calculation of a standard deviation of (1, 0, 0, 0). Certainly, there are more than one specific manner for solving the standard deviation, and one specific example is provided herein.

Predicted values of small- and medium-sized advertisements have some fluctuation by introducing the fluctuation value, so that these orders have an opportunity of participating in contest, so as to ensure ecological health of an entire advertisement system and prevent individual orders from occupying most exposure.

In addition, by using the foregoing formula, when the predicted value is calculated, the user features, for example, user features such as basic information of the user such as an age and a gender and order information such as an advertisement position and an order ID, are directly introduced to a coarse selection sequence as the features. The order information is substantially a constituent part of the push information features mentioned in the foregoing embodiments.

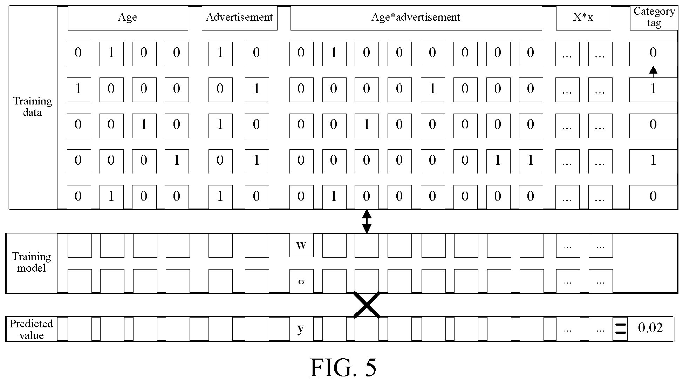

FIG. 5 is a diagram of calculating a predicted value and shows training of training data. The training data corresponds to the foregoing historical push data. In this embodiment, 01 is used to discretize the user features and advertisement features. For example, two sequences, 0100 and 1000, in FIG. 5 correspond to different ages or different age groups of the user. 10 and 01 correspond to different advertisements. Age*advertisement represents a Cartesian product of a feature column corresponding to ages and a feature column corresponding to advertisements. X*x shown in FIG. 5 represents other un-shown user features or advertisement features. When a predicted value of an advertisement is calculated, only an advertisement column usually appears, and 0 and 1 are used to respectively represent whether corresponding users watches or clicks the advertisement.

The category tags in the training data are used for representing whether a user in the historical advertisement data executes a conversion operation such as clicking on the advertisement. For example, the training data includes a record that a user A clicks an advertisement B. Therefore, in FIG. 5, in a training data row in which the user A is located, an age of the user A and advertisements watched by the user A are recorded, and the corresponding category tag in the training data row in which the user A is located uses " 1" to represent that the user A watches the advertisement.

The training data is trained to obtain a training model based on w and $\sigma$. w represents a weight, and $\sigma$ represents a standard deviation. A predicted value $y$ is calculated. 0.02 in the figure represents that the predicted value $y$ calculated in an example is 0.02. A value of a category tag in a data row corresponding to the predicted value represents the predicted value, and the predicted value is a probability for the advertisement that a training model obtained based on the historical advertisement determines to push to the clicked.

An embodiment of the present invention further provides a computer storage medium, the computer storage medium storing computer executable instructions, and the computer executable instructions being used for performing at least one of the methods for coarsely selecting push information of the foregoing embodiments, for example, performing the method shown in FIG. 1 and/or FIG. 2.

The computer storage medium may be a random storage medium RAM, a read-only storage medium ROM, a flash memory Flash, a magnetic tape, or an optical disk, and optionally, may be a non-transient storage medium.

In several embodiments provided in this application, it should be understood that the disclosed device and method can be implemented in other manners. The above-described device embodiments are merely schematic. For example, division of the units is merely division of logic functions and may be another division manner during actual implementation. For example, multiple units or components may be combined or may be integrated into another system, or some features may be omitted or not be executed. In addition, mutual coupling, direct coupling, or communication connection between the displayed or discussed constituent parts may be indirect coupling or communication connection by means of some interfaces, devices, or units and may be electric, mechanical, or of another form.

The foregoing units described as separate components may be or may not be physically separated. Components displayed as units may be or may not be physical units, and may be located in one place or may be distributed on multiple network units. An objective of the solutions of this embodiment may be implemented by selecting some or all of the units according to actual needs.

In addition, the functional modules in the embodiments of the present invention may be integrated into one processing unit, or each of the units may be used as a unit alone, or two or more units may be integrated into one unit. The integrated units may be implemented in the form of hardware, or may be implemented in the form of a hardware and software functional unit.

A person of ordinary skill in the art may understand that all or some of the steps of the foregoing method embodiments may be implemented by using hardware relevant to a program instruction. The program may be stored in a computer readable storage medium. When being executed, the program executes steps of the foregoing method embodiments. The storage medium includes: various media capable of storing program code such as a mobile storage device, a read-only memory (ROM, Read-Only Memory), a random access memory (RAM, Random Access Memory), a magnetic disk, or an optical disc.

The foregoing descriptions are merely specific implementations of the present invention, but are not intended to limit the protection scope of the present disclosure. Any variation or replacement readily figured out by a person skilled in the art within the technical scope disclosed in the present disclosure shall fall within the protection scope of the present disclosure. Therefore, the protection scope of the present disclosure should be subject to the protection scope of the claims.

**Claims**

1. A method for coarsely selecting push information, the method comprising:

   determining a feature for calculating a predicted value, and a weight corresponding to the feature according to historical push data of the push information;
   calculating a standard deviation of the feature;
   determining a fluctuation probability of the standard deviation;
   calculating the predicted value based on the weight, the standard deviation, and the fluctuation probability, the standard deviation and the fluctuation probability being used for calculating a fluctuation value for correcting the weight; and
   selecting, based on the predicted value, push information satisfying a preset condition.

2. The method according to claim 1, wherein the method further comprises:

   determining a fluctuation coefficient, wherein the fluctuation coefficient is used for limiting a value range of the fluctuation value; and
   the calculating the predicted value based on the weight, the standard deviation, and the fluctuation probability comprises:
   calculating the predicted value based on the weight, the standard deviation, the fluctuation probability, and the fluctuation coefficient.

3. The method according to claim 2, wherein the method further comprises:

   determining a security factor, wherein the security factor is used for preventing an abnormal solution of the fluctuation value caused when the standard deviation is a particular value or the standard deviation is not obtained; and
   the calculating the predicted value based on the weight, the standard deviation, and the fluctuation probability comprises:
   calculating the predicted value based on the weight, the standard deviation, the fluctuation probability, and the security factor.

4. The method according to claim 3, wherein the calculating the predicted value based on the weight, the standard deviation, the fluctuation probability, and the security factor comprises:
   calculating the predicted value $y$ by using the following formula:

$$y = \frac{1}{1 + e^{-\sum (w_i + \alpha \sqrt{\frac{1}{\beta + \frac{1}{\sigma_i^2}} * p}) x_i}}$$

   wherein $x_i$ is a value of a feature $i$, $w_i$ is a weight of the feature $i$, $\alpha$ is the fluctuation coefficient, $\beta$ is the security factor, and $\sigma_i$ is a standard deviation of the feature.

5. The method according to any one of claims 1 to 4, wherein
   the determining a feature for calculating a predicted value, and a weight corresponding to the feature according to historical push data of the push information comprises:

   determining push information features for calculating the predicted value; and
   determining user features for calculating the predicted value.

6. The method according to claim 5, wherein
   the determining user features for calculating the predicted value comprises:

   determining reliability of the user features; and
   selecting the user features for calculating the predicted value based on the reliability.

**7.** The method according to claim 5, wherein
the determining user features for calculating the predicted value comprises:
selecting one or more unprocessed user features from the user features as the user features for calculating the
predicted value.

**8.** An apparatus for coarsely selecting push information, the apparatus comprising a determining unit, a calculation
unit, and a selection unit,
the determining unit being configured to determine a feature for calculating a predicted value, and a weight corresponding to the feature according to historical push data of the push information;
the calculation unit being configured to calculate a standard deviation of the feature;
the determining unit being further configured to determine a fluctuation probability of the standard deviation;
the calculation unit being further configured to calculate the predicted value based on the weight, the standard
deviation, and the fluctuation probability, the standard deviation and the fluctuation probability being used for calculating a fluctuation value for correcting the weight; and
the selection unit being configured to select, based on the predicted value, push information satisfying a preset
condition.

**9.** The apparatus according to claim 8, wherein
the determining unit is further configured to determine a fluctuation coefficient, wherein the fluctuation coefficient is
used for limiting a value range of the fluctuation value; and
the calculation unit is configured to calculate the predicted value based on the weight, the standard deviation, the
fluctuation probability, and the fluctuation coefficient.

**10.** The apparatus according to claim 9, wherein
the determining unit is configured to determine a security factor, wherein the security factor is used for preventing
an abnormal solution of the fluctuation value caused when the standard deviation is a particular value or the standard
deviation is not obtained; and
the calculation unit is configured to calculate the predicted value based on the weight, the standard deviation, the
fluctuation probability, and the security factor.

**11.** The apparatus according to claim 10, wherein
the calculation unit is configured to calculate the predicted value $y$ by using the following formula:

$$y = \frac{1}{1 + e^{-\sum (w_i + \alpha \sqrt{\frac{1}{\beta + \frac{1}{\sigma_i^2}} * p})x_i}}$$

wherein $x_i$ is a value of a feature $i$, $w_i$ is a weight of the feature $i$, $\alpha$ is the fluctuation coefficient, $\beta$ is the security
factor, and $\sigma_i$ is a standard deviation of the feature.

**12.** The apparatus according to any one of claims 8 to 11, wherein
the determining unit is configured to: determine push information features for calculating the predicted value; and
determine user features for calculating the predicted value.

**13.** The apparatus according to claim 12, wherein
the determining unit is configured to: determine reliability of the user features; and select the user features for
calculating the predicted value based on the reliability.

**14.** The apparatus according to claim 12, wherein
the determining unit is configured to select one or more unprocessed user features from the user features as the
user features for calculating the predicted value.

**15.** A computer storage medium, the computer storage medium storing computer executable instructions, the computer
executable instructions being used for performing at least one of the methods for coarsely selecting push information
according to claims 1 to 7.

S110

Determine a feature for calculating a predicted value, and a weight corresponding to the feature according to historical push data of push information

S120

Calculate a standard deviation of the feature

S130

Determine a fluctuation probability of the standard deviation

S140

Calculate the predicted value based on the weight, the standard deviation, and the fluctuation probability, the standard deviation and the fluctuation probability being used for calculating a fluctuation value correcting the weight

S150

Select, based on the predicted value, push information satisfying a preset condition

FIG. 1

Push information features

User features

Determine a fluctuation probability

Calculate a standard deviation

Determine a fluctuation coefficient

Determine a security factor

Predicted value

Sort the predicted values and form a sorting result

## FIG. 2

Apparatus for coarsely selecting push information

Determining unit 110

Calculation unit 120

Selection unit 130

## FIG. 3

220

250

210

Processor

230

240

External communications interface

Database

## FIG. 4

| Training data | Age | | | | Advertisement | | Age*advertisement | | | | | | | | X*x | | Category tag |
|---|---|---|---|---|---|---|---|---|---|---|---|---|---|---|---|---|---|
| | 0 | 1 | 0 | 0 | 1 | 0 | 0 | 1 | 0 | 0 | 0 | 0 | 0 | 0 | ... | ... | 0 |
| | 1 | 0 | 0 | 0 | 0 | 1 | 0 | 0 | 0 | 0 | 1 | 0 | 0 | 0 | ... | ... | 1 |
| | 0 | 0 | 1 | 0 | 1 | 0 | 0 | 0 | 1 | 0 | 0 | 0 | 0 | 0 | ... | ... | 0 |
| | 0 | 0 | 0 | 1 | 0 | 1 | 0 | 0 | 0 | 0 | 0 | 0 | 1 | 1 | ... | ... | 1 |
| | 0 | 1 | 0 | 0 | 1 | 0 | 0 | 1 | 0 | 0 | 0 | 0 | 0 | 0 | ... | ... | 0 |

| Training model | | | | | | w | | | | | | | ... | ... | | | |
| | | | | | | σ | | | | | | | ... | ... | | | |

| Predicted value | | | | | | y | | | | | | | ... | ... | = | 0.02 |

## FIG. 5

<div align="center">

**INTERNATIONAL SEARCH REPORT**

</div>

| | International application No. |
|---|---|
| | **PCT/CN2016/112496** |

**A. CLASSIFICATION OF SUBJECT MATTER**

G06F 17/30 (2006.01) i

According to International Patent Classification (IPC) or to both national classification and IPC

**B. FIELDS SEARCHED**

Minimum documentation searched (classification system followed by classification symbols)

G06F

Documentation searched other than minimum documentation to the extent that such documents are included in the fields searched

Electronic data base consulted during the international search (name of data base and, where practicable, search terms used)

CNPAT; EPODOC; WPI; GOOGLE; CNKI: push, recommend, history, feature, weight, standard deviation, variance, fluctuation, undulation, ratio, probability, coefficient, correct, adjust, user

**C. DOCUMENTS CONSIDERED TO BE RELEVANT**

| Category* | Citation of document, with indication, where appropriate, of the relevant passages | Relevant to claim No. |
|---|---|---|
| A | CN 103559622 A (FOCUS TECHNOLOGY CO., LTD.), 05 February 2014 (05.02.2014), claims 1-4, description, paragraphs [0116]-[0129], and figures 1-4 | 1-15 |
| A | CN 105160548 A (BEIJING QIHOO TECHNOLOGY CO., LTD. et al.), 16 December 2015 (16.12.2015), the whole document | 1-15 |
| A | US 2009006368 A1 (MICROSOFT CORPORATION), 01 January 2009 (01.01.2009), the whole document | 1-15 |
| A | CN 105205046 A (ZHENJIANG MINGTAI INFORMATION TECHNOLOGY CO., LTD. et al.), 30 December 2015 (30.12.2015), the whole document | 1-15 |
| A | CN 102034186 A (CHINA MOBILE GROUP SICHUAN CO., LTD.), 27 April 2011 (27.04.2011), the whole document | 1-15 |
| A | US 2010169338 A1 (EXPANSE NETWORKS, INC.), 01 July 2010 (01.07.2010), the whole document | 1-15 |
| A | CN 104966125 A (TONGJI UNIVERSITY), 07 October 2015 (07.10.2015), the whole document | 1-15 |

☐ Further documents are listed in the continuation of Box C.     ☒ See patent family annex.

| *   Special categories of cited documents: | "T"   later document published after the international filing date or priority date and not in conflict with the application but cited to understand the principle or theory underlying the invention |
|---|---|
| "A"   document defining the general state of the art which is not considered to be of particular relevance | |
| "E"   earlier application or patent but published on or after the international filing date | "X"   document of particular relevance; the claimed invention cannot be considered novel or cannot be considered to involve an inventive step when the document is taken alone |
| "L"   document which may throw doubts on priority claim(s) or which is cited to establish the publication date of another citation or other special reason (as specified) | "Y"   document of particular relevance; the claimed invention cannot be considered to involve an inventive step when the document is combined with one or more other such documents, such combination being obvious to a person skilled in the art |
| "O"   document referring to an oral disclosure, use, exhibition or other means | |
| "P"   document published prior to the international filing date but later than the priority date claimed | "&"   document member of the same patent family |

| Date of the actual completion of the international search | Date of mailing of the international search report |
|---|---|
| 20 March 2017 (20.03.2017) | **11 April 2017 (11.04.2017)** |

| Name and mailing address of the ISA/CN: <br> State Intellectual Property Office of the P. R. China <br> No. 6, Xitucheng Road, Jimenqiao <br> Haidian District, Beijing 100088, China <br> Facsimile No.: (86-10) 62019451 | Authorized officer <br><br> **OU, Xiaodan** <br><br> Telephone No.: (86-10) **82246933** |
|---|---|

Form PCT/ISA/210 (second sheet) (July 2009)

## INTERNATIONAL SEARCH REPORT
### Information on patent family members

International application No.

**PCT/CN2016/112496**

| Patent Documents referred in the Report | Publication Date | Patent Family | Publication Date |
|---|---|---|---|
| CN 103559622 A | 05 February 2014 | None | |
| CN 105160548 A | 16 December 2015 | None | |
| US 2009006368 A1 | 01 January 2009 | WO 2009006234 A2 | 08 January 2009 |
| CN 105205046 A | 30 December 2015 | None | |
| CN 102034186 A | 27 April 2011 | None | |
| US 2010169338 A1 | 01 July 2010 | None | |
| CN 104966125 A | 07 October 2015 | None | |

Form PCT/ISA/210 (patent family annex) (July 2009)